# EUROPÄISCHE PATENTSCHRIFT

(11) **EP 2 047 223 B1**
(45) Veröffentlichungstag und Bekanntmachung des Hinweises auf die Patenterteilung: **14.09.2011**
(21) Anmeldenummer: 07787461.8
(22) Anmeldetag: 12.07.2007
(51) Int. Cl.: G01L 7/10

(54) **DRUCKERFASSUNGSVORRICHTUNG**
PRESSURE SENSING DEVICE
DISPOSITIF DE DÉTECTION DE PRESSION

(30) Priorität: 19.07.2006 DE 102006033467
(43) Veröffentlichungstag der Anmeldung: 15.04.2009
(73) Patentinhaber: Continental Automotive GmbH, 30165 Hannover (DE)
(72) Erfinder: LEIDERER, Hermann, Dr., 93109 Wiesent (DE)
(86) Internationale Anmeldenummer: PCT/EP2007/057190
(87) Internationale Veröffentlichungsnummer: WO 2008/009622

(56) Entgegenhaltungen:
- EP-A- 0 793 082
- EP-A- 1 203 937
- DE-A1- 10 228 000
- US-A1- 2002 134 164
- US-A1- 2003 182 783

## Beschreibung

Die vorliegende Erfindung bezieht sich auf eine Druckerfassungsvorrichtung zur Erfassung von Drücken in Leitungen oder Behältern, die ein Druck übertragendes Fluid enthalten, und insbesondere auch eine Druckerfassungsvcrrichtung zur Verwendung in Kraftfahrzeugen.

Bei der Messung von Drücken, beispielsweise dem Öldruck in Brennkraftmaschinen oder dem Rail-Druck in Common-Rail-Motoren, werden häufig hohe Anforderungen an die Dichtigkeit zwischen einer Vorrichtung zur Erfassung des Drucks und dem Anschluss an beispielsweise der Leitung oder dem Behälter mit dem Fluid, dessen Druck zu messen ist, gestellt. Daher werden häufig Druckerfassungsvorrichtungen verwendet, die ein Metallanschlussstück als Verbindungsstück zu dem Anschluss aufweisen. Die Verwendung eines Metallanschlussstücks hat insbesondere den Vorteil, dass hohe Anschraubkräfte bzw. -drehmomente bei der Montage verwendet werden können und unter anderem auch deshalb die hohen Anforderungen an die Druckdichtheit der Verbindung erfüllt werden können. Daneben können solche Druckerfassungsvorrichtungen auch bei hohen Temperaturen eingesetzt werden.

Üblicherweise wird dann das eigentliche Drucksensorelement, beispielsweise ein keramisches Drucksensorelement oder eine spezielle piezoresistive Messzelle, in das Metallanschlussstück eingebracht. Das Drucksensorelement wird, typischerweise durch Drahtbonden, mit einer Leiterplatte verbunden. Da der Anschluss der Druckerfassungsvorrichtung über eine Steckverbindung erfolgen soll, umfasst eine solche Druckerfassungsvorrichtung einen Steckverbinderteil mit Kontaktelementen. Der Steckverbinderteil wird üblicherweise mit dem Metallanschlussstück durch Umbördeln eines entsprechenden Abschnitts des Metallanschlussstücks verbunden, so dass keine einfache Verbindung der Kontaktelemente mit den Anschlüssen der Leiterplatte möglich ist. Die Kontaktelemente werden daher mit entsprechenden Anschlüssen der Leiterplatte mittels flexibler Folien mit Leiterbahnen, Pressfedern verbunden, oder sie sind als Schneidkontakte ausgebildet und über entsprechende Leitungen mit den Anschlüssen der Leiterplatte verbunden.

Die DE 102 28 000 A1 offenbart eine Vorrichtung zur Druckmessung, mit einem in einem Gehäuse angeordneten Druckaufnehmer, der auf einer ersten Seite Sensorelemente und eine Sensormembran aufweist und auf einer der ersten Seite gegenüberliegenden zweiten Seite mit einer Ausnehmung versehen ist, die sich von der zweiten Seite aus bis zu der Sensormembran erstreckt. Der Druckaufnehmer ist als Albleiter-Druckaufnehmer ausgebildet und mit einem die Ausnehmung umgebenden Randbereich der zweiten Seite direkt auf ein mit einem ersten Druckabschnitt versehenen Trägerteil mittels einer Lotschicht derart aufgelötet, dass der erste Druckkanalabschnitt und die Ausnehmung miteinander in Verbindung stehen.
Die US 2003/182783 A1 offenbart einen Drucksensor mit einem Abtastelement in einer Abtastkammer, welches durch zwei Gehäuseteile definiert wird, wobei eines davon auf das andere gebogen wird. Ein innerer Druck der Kammer wird durch eine Biegekraft beeinflusst. Um den inneren Druck zu überwachen, wird das Abtastelement des Drucksensors verwendet. Ein Ausgangssignal des Abtastelements wird der Biegemaschine gesendet. Die Biegemaschine steuert die Biegekraft auf der Grundlage des Ausgangssignals.

Die Herstellung solcher Druckerfassungsvorrichtung ist daher vergleichsweise kompliziert.

Der vorliegenden Erfindung liegt daher die Aufgabe zugrunde, eine einfach herzustellende Druckerfassungsvorrichtung bereitzustellen.

Die Aufgabe wird gelöst durch eine Druckerfassungsvorrichtung mit einem Sockelelement zur Halterung der Druckerfassungsvorrichtung, das einen Anschlusskanal zur Zuführung eines unter Druck stehenden Fluids aufweist, einem gestreckten, sich entlang einer Steckrichtung erstreckenden Trägerkörper, der an einem Ende einen Steckverbinderabschnitt zum Zusammenstecken mit einem komplementären Steckverbinder in der Steckrichtung aufweist, der an dem anderen Ende mit dem Sockelelement verbunden ist und einen mit dem Anschlusskanal verbundenen Druckkanal aufweist, und eine quer zur Steckrichtung verlaufende, mit dem Druckkanal kommunizierende Aufnahmeöffnung besitzt, und einem Drucksensorelement, das druckdicht in die Aufnahmeöffnung eingesetzt ist, so dass eine der druckempfindlichen Sensorflächen des Drucksensorelements Druck aus dem Druckkanal ausgesetzt ist, und mit Kontaktelementen in dem Steckverbinderabschnitt zur Übertragung von Signalen verbunden ist.

Unter einem Trägerkörper wird insbesondere ein Trägerkörper verstanden, der als ganzer gesehen nicht abgewickelt ist. Vorzugsweise ist zwar die Länge des Trägerkörpers in Steckrichtung größer als die Ausdehnung quer zur Steckrichtung, doch braucht dies nicht unbedingt der Fall zu sein.

Eine solche Druckerfassungsvorrichtung ist sehr einfach herzustellen, da die Montage des Drucksensorelements durch die Aufnahmeöffnung des Trägerteil, das gleichzeitig als Steckverbinder fungiert, erfolgen kann. Diese Montage kann dabei vor oder nach der Verbindung des Trägerkörpers mit dem Sockelelement, das zur Halterung der Druckerfassungsvorrichtung an bzw. der Verbindung der Druckerfassungsvorrichtung mit der Leitung oder dem Behälter bzw. einem Anschluss der Leitung oder des Behälters dient, erfolgen.

Darüber hinaus ergibt sich durch die gestreckte Form der Druckerfassungsvorrichtung eine besonders einfache Montage derselben an einer Leitung oder einem Behälter, da sowohl die Befestigung des Sockelements als auch die eines zu dem Steckverbinderabschnitt komplementären Steckers aus der gleichen Richtung erfolgen können und daher wenig Platz beanspruchen. Dies ist insbesondere im Kraftfahrzeugbau von erheblichem Vorteil.

Weiter kann sich durch die Anordnung des Drucksensorelements in dem Trägerteil eine teilweise thermische Entkopplung von dem Sockelelement ergeben, die genauere Druckmessungen auch bei variierenden Temperaturen der Leitung oder des Behälter zulässt. Darüber hinaus kann sich eine thermische Entkopplung des druckführenden Fluids im Bereich des Drucksensorelements von dem Sockelelement ergeben, was ebenfalls zu höherer Messgenauigkeit führen kann. Dies ist insbesondere der Fall, wenn, was bevorzugt ist, der Druckkanal in der Aufnahmeöffnung und ggf. in dem Trägerkörper endet und somit keine, wesentliche Konvektion des Fluids in der Druckerfassungsvorrichtung auftritt.

Das Sockelelement kann grundsätzlich aus einem beliebigen, zur Halterung geeigneten Material bestehen. Vorzugsweise ist es aus Metall. Dies hat den Vorteil, dass es bei geringem Preis und einfacher Herstellung eine hohe Festigkeit bietet. Insbesondere kann es mit bekannten Verfahren einfach günstig geformt werden.

Zum Anschluss an eine Leitung oder einen Behälter kann das Sockelelement prinzipiell beliebig gestaltet sein. Vorzugsweise verfügt das Sockelelement jedoch über ein Außengewinde zu Befestigung in einer Öffnung einer Leitung oder eines Behälters mit einem entsprechenden Innengewinde. Die Verwendung eines Gewindes erlaubt nicht nur eine sichere Befestigung, sondern ermöglicht auch eine sehr gute Dichtheit der Verbindung.

Weiterhin ermöglicht es diese Ausführungsform, dass der Trägerkörper mit dem Sockelelement durch eine Bördelverbindung verbunden ist. Dazu kann der Trägerkörper insbesondere an dem entsprechenden Ende einen umlaufenden Flansch aufweisen, der von einem entsprechenden Abschnitt des Sockelelements nach Umbördelung umfasst wird.

Das Sockelelement braucht nicht unbedingt über spezielle Strukturen zur Montage an einer Leitung oder einem Behälter zu verfügen. Bespielsweise könnte es eine zylindrische Mantelfläche aufweisen, die bei der Montage mit einer Zange gefasst wird. Bevorzugt verfügt das Sockelelement jedoch über wenigstens eine Montagestruktur, vorzugsweise an seiner Außenfläche, besonders bevorzugt in Form einer Sechskantstruktur. Vorzugsweise ist der größte Durchmesser des Trägerkörpers kleiner als der kleinste Durchmesser der Sechskantstruktur. Dies hat den Vorteil, dass dann eine Montage aus der Steckrichtung, beispielsweise mit einem Steckschlüssel ähnlich einem Steckschlüssel zum Anziehen von Zündkerzen, erfolgen kann.

Der Druckkanal kann grundsätzlich auf beliebige Weise mit dem Anschlusskanal verbunden sein. Darunter wird verstanden, dass die Druckerfassungsvorrichtung so ausgebildet ist, dass ein Fluid aus dem Anschlusskanal Druck auf ein Fluid in dem Druckkanal übertragen kann. Insbesondere können die beiden Kanäle kommunizieren, d.h. einen Austausch des Fluids, also eines Gases oder einer Flüssigkeit, ermöglichen. Beispielsweise kann der Anschlusskanal mit seiner Mündung direkt gegenüber der Mündung des Druckkanals angeordnet und damit mit diesem verbunden sein. Der Anschlusskanal und der Druckkanal können aber auch über eine Kammer, beispielsweise zwischen Sockelelement und Trägerkörper, verbunden sein.

Eine besonders einfach herzustellende Ausführungsform der Druckerfassungsvorrichtung ergibt sich, wenn der der Anschlusskanal und ein mit diesem verbundener Abschnitt des Druckkanals geradlinig verlaufen.

Der Druckkanal kann prinzipiell in beliebiger Art und Weise verlaufen. Bei einer, insbesondere eine Weiterbildung der in dem vorhergehenden Absatz beschriebenen Ausführungsform besonders bevorzugten Ausführungsform ist der Trägerkörper so ausgebildet, dass der Druckkanal mit einem zu der Steckrichtung quer oder geneigt verlaufenden Endabschnitt in die Aufnahmeöffnung führt. Dies hat den Vorteil, dass der Druckkanal besonders einfach herzustellen ist; insbesondere kann er dann nur zwei geradlinige aneinander anschließende Abschnitte aufweisen. Unter einem schrägen Verlauf wird dabei verstanden, dass eine Längsachse des mit der Steckrichtung einen Winkel größer als 1°, vorzugsweise größer als 10° einschießt.

Weiter ist es bevorzugt, dass der Trägerkörper so ausgebildet ist, dass zwischen dem Druckkanal und der Aufnahmeöffnung ein Steg liegt, auf dem das Drucksenscrelement oder ein Trägerelement für das Drucksensorelement gehalten ist und/oder aufliegt. Diese Ausführungsform hat den Vorteil, dass zum einen ein kompakter Aufbau erzielt werden kann, und zum anderen eine einfache Einführung des Drucksensorelements oder eines Trägerelements mit dem Drucksensorelements in die Aufnahmeöffnung und eine einfache Befestigung derselben darin ermöglicht wird.

Prinzipiell kann der Trägerkörper mehrteilig ausgebildet sein. Vorzugsweise ist er jedoch einstückig ausgebildet. Auf diese Weise kann der Trägerkörper sehr stabil, aber gleichzeitig einfach herstellbar sein. Als Materialien, aus dem der Trägerkörper gefertigt sein kann, kommen dabei neben Metall, vor allem keramische Materialien und Kunststoffe, insbesondere hoch temperaturbeständige Kunststoffe in Betracht.

Der Trägerkörper braucht grundsätzlich nur gestreckt ausgebildet zu sein. Dabei kann er insbesondere noch Vorsprünge, beispielsweise den schon erwähnten Befestigungsflansch oder zurückgesetzte Bereiche, beispielsweise im Bereich des Steckverbinderabschnitts, aufweisen. Eine besonders einfacher Herstellung des Trägerkörpers ergibt sich, wenn der Trägerkörper wenigstens bis auf den Steckverbinderabschnitt und, falls vorhanden den Befestigungsflansch, zylindrisch ist.

Prinzipiell kann das Drucksensorelement in beliebiger für deren Funktion geeigneter Orientierung in der Aufnahmeöffnung angeordnet sein. Es ist jedoch bevorzugt, dass das Drucksensorelement so angeordnet ist, dass eine Normale auf eine druckempfindliche Fläche des Drucksensorelements orthogonal oder schräg zu der Steckrichtung verläuft. Diese Orientierung des Drucksensorelements hat den Vorteil, dass diese bzw. ein diese tragendes Trägerelement in der Aufnahmeöffnung die Aufnahmeöffnung von dem Druckkanal druckdicht abtrennen kann.

Die Signale des Drucksensorelements können prinzipiell außerhalb des Trägerkörpers verarbeitet werden. Vorzugsweise ist eine Auswerteelektronik zur Auswertung und gegebenenfalls Ansteuerung des Drucksensorelements jedoch in dem Trägerkörper angeordnet, was Störungen der Signale von dem Drucksensorelement mindert und einen einfacheren elektrischen Anschluss erlaubt. Bei einer bevorzugten Ausführungsform der Druckerfassungsvorrichtung sind das Drucksensorelement und eine Auswerteelektronik zur Ansteuerung und/oder Auswertung von Signalen des Drucksensorelements auf einem Chip integriert, der mit den Kontaktelementen zur Signalübertragung verbunden, insbesondere kontaktiert, ist. Auf diese Weise braucht nur ein Bauteil in dem Trägerkörper befestigt zu werden und der Einfluss von Störfeldern auf die Signalübertragung zwischen Drucksensorelement und Auswerteelektronik kann stark reduziert werden. Der Chip kann auch als Trägerelement für das Drucksensorelement aufgefasst werden.

Bei einer anderen bevorzugt Ausführungsform der Druckerfassungsvorrichtung sind das Drucksensorelement und eine Auswerteelektronik zur Ansteuerung und/oder Auswertung von Signalen des Drucksensorelements auf einem Trägerelement gehalten, wobei die Auswerteelektronik mit den Kontaktelementen zur Signalübertragung verbunden ist. Auch diese Ausführungsform hat den Vorteil, dass nur ein Bauteil in den Trägerkörper eingesetzt und in diesem befestigt zu werden braucht. Als Trägerelement kann dabei insbesondere eine Keramikplatte oder eine Leiterplatte dienen.

Ein weiterer Vorteil der in beiden letzten Absätzen genannte Ausführungsformen besieht darin, dass der Chip bzw. Anschlüsse des Trägerelements direkt mit den Kontaktelementen kontaktiert werden können, wozu insbesondere Bonddrähte bzw. Drahtbonden oder andere flexible Verbindungen verwendet werden können. Es ist aber auch möglich, andere in der Einleitung genannte Kontaktierungsmöglichkeiten zu wählen.

Die Befestigung des Chips bzw. des Trägerelements au dem Trägerkörper kann auf prinzipiell beliebige Art und Weise erfolgen. Der Vorteil einer besonders einfachen Montage ergibt sich wenn, der Chip oder das Trägerelement mit dem Trägerkörper verklebt sind. Vorzugsweise wird ein Kleber verwendet, der eine elastische Klebeverbindung ergibt, so dass ein Ausgleich mechanischer Spannungen zwischen Chip bzw. Trägerelement ermöglicht wird.

Insbesondere bei Verwendung im Kraftfahrzeugbereich kann die Druckerfassunasvorrichtung Feuchtigkeit und/oder anderen, die Funktion der Vorrichtung gegebenenfalls beeinträchtigenden Flüssigkeiten oder Gasen ausgesetzt sein. Zum Schutz vor solchen Einflüssen ist vorzugsweise der Chip oder das Trägerelement mit Schutzmaterial abgedeckt. Bei diesem Schutzmaterial kann es sich insbesondere um ein Gel handeln, das die Aufnahmeöffnung über ihren Querschnitt möglichst vollständig ausfüllt.

Weiter kann die Druckerfassungsvorrichtung einen Deckel umfassen, der die Aufnahmeöffnung verschließt. Dadurch sind das Druucksenscrelement bzw. der Chip oder das Trägerelement sowie ein gegebenenfalls vorhandenes Schutzmaterial insbesondere gegen mechanische Einflüsse geschützt.

Der Deckel kann jedoch auch noch weitere Funktionen erfüllten. So verschließt der Deckel bei einer bevorzugten Ausführungsform der Druckerfassungsvorrichtung die Aufnahmeöffnung bis auf eine Anschlussöffnung gasdicht. Diese Druckerfassungsvorrichtung kann dann als Differenzdruckerfassungsvorrichtung verwendet werden, der die Druckdifferenz zwischen dem Druck in dem Anschlusskanal und dem Druck in der Anschlussöffnung erfasst.

Die Druckerfassungsvorrichtung kann jedoch auch zur Erfassung von Absolutdrücken ausgebildet sein. Dazu ist dann das Drucksensorelement zur Messung eines Absolutdrucks ausgebildet. Beispielsweise kann sie hierzu über eine Referenzvakuumzelle verfügen, die ein Gas mit bekanntem Druck enthält.

Alternativ kann das Drucksensorelement auf einer Bodenfläche der Aufnahmeöffnung befestigt ist, und der Druckkanal zwischen der Bodenfläche und der quer zur Steckrichtung liegenden Oberfläche des Trägerkörpers in die Aufnahmeöffnung mündet. In diesem Fall kann vorzugsweise ein Deckel vorgesehen sein, der die Aufnahmeöffnung druckdicht abschießt.

Gemäß einer bevorzugten Weiterbildung weist die Druckerfassungsvorrichtung vorzugsweise weiter einen an dem Druckkanal angeordneten Temperatursensor auf. Eine solche Druckerfassungsvorrichtung ermöglicht in vorteilhafter Weise nicht nur die Erfassung des Drucks in einem Fluid, sondern auch der Temperatur. Besonders bevorzugt sind die Anschlüsse des Temperatursensors direkt mit Kontaktelementen in dem Steckverbinderabschnitt kontaktiert.

Die Druckererfassungsvorrichtung kann zur Messung von Drücken in verschiedenen Bereichen, beispielsweise bis zu 100 bar ausgebildet sein.

Die Erfindung im Folgenden noch weiter beispielhaft anhand der Zeichnungen erläutert. Es zeigen:
- Fig. 1: eine schematische Schnittdarstellung einer Drucker- fassungsvorrichtung nach einer ersten bevorzugten Ausführungsform der Erfindung,
- Fig. 2: eine schematische Schnittdarstellung einer Drucker- fassungsvorrichtung nach einer zweiten bevorzugten Ausführungsform der Erfindung,
- Fig. 3: eine schematische Schnittdarstellung einer Drucker- fassungsvorrichtung nach einer dritten bevorzugten Ausführungsform der Erfindung,
- Fig. 4: eine schematische Schnittdarstellung einer Drucker- fassungsvorrichtung nach einer vierten bevorzugten Ausführungsform der Erfindung, und
- Fig. 5: eine schematische Schnittdarstellung einer Drücker- fassungsvorrichtung nach einer fünften bevorzugten Ausführungsform der Erfindung,

Eine Druckerfassungsvorrichtung nach einer ersten bevorzugten Ausführungsform umfasst ein Sockelelement 1, einen gestreckten, aus Kunststoff gefertigten Trägerkörper 2, der an einem Ende einen Steckverbinderabschnitt 3 zum Zusammenstecken mit einem nicht in den Figuren gezeigten komplementären Steckverbinder in einer Steckrichtung S und an dem anderen Ende einen Befestigungsflansch 4 umfasst, sowie einen Chip 5 mit einem integrierten Drucksensorelement 6 und einer Auswerteelektronik zur Ansteuerung des Drucksensorelements 6 und zur Auswertung von Signalen des Drucksensorelements 6.

Das Sockelelement 1 ist aus Metall gefertigt und weist zur Befestigung in einem Innengewinde eines Anschlusses eines Druckbehälters mit einem druckführenden Fluid ein Außengewinde 7 und als Montagestruktur einen Außensechskantabschnitt auf. Eine invertierte Bauweise für ein Außengewinde ist ebenfalls möglich. Gleiches gilt für die Ausbildung für eine Steckverbindung.

In dem Sockelelement 1 ist parallel zur Achse des Außengewindes 7 ein Anschlusskanal 8 angeordnet, der durch das Sockelelement 1 hindurchführt und zur Führung des druckführenden Fluids von dem Druckbehälter, in die Druckerfassungsvorrichtung dient.

Der Trägerkörper 2, der sich linear in Steckrichtung S erstreckt, verfügt über eine Druckkanal 9, der L-förmige ausgebildet ist, wobei der längere Schenkel 10 an dem Ende mit dem Befestigungsflansch 4 linear in Steckrichtung 9 und koaxial mit dem Anschlusskanal 8 verläuft. Damit verläuft auch der Anschlusskanal 8 in Steckrichtung S.

Der Schenkel 10 setzt sich in eine Endabschnitt 11 fort, der orthogonal zu der Steckrichtung S verläuft und in eine in dem Trägerkörper 2 ausgebildete Aufnahmeöffnung 11 mündet, die sich quer zu Steckrichtung S von der äußerten Oberfläche des Trägerkörpers 2 in dessen Inneres erstreckt und zur Aufnahme das Chips 5 dient.

Der Steckverbinderabschnitt 3 des Trägerkörpers 2 besitzt eine Aufnahme 12 für den Steckerbereich eines komplementären Steckverbinders und Kontaktelementkanäle, in denen Kontaktelemente 13 für den Steckverbinderabschnitt 3 angeordnet sind, die bis in die Aufnahmeöffnung 11 reichen.

In der Aufnahmeöffnung 11 ist der Chip 5 so angeordnet, dass eine der druckempfindlichen Sensorflächen 14 mit ihrer Normalen orthogonal zu der Steckrichtung S und parallel zu der Richtung des Endabschnitts des Druckkanals 9 aufgerichtet ist.

Der Chip 5 ist mittels Kleber 15 druckdicht auf dem Boden des Trägerkörpers 2 befestigt, wobei ein Abschnitt des Chips auf einem Steg 16 zwischen der Aufnahmeöffnung 11 und dem Druckkanal 9 befestigt ist.

Der Chip 5 ist mittels Bonddrähten 17 direkt mit den Kontaktelementen 12 in dem Steckverbinderabschnitt 3 kontaktiert bzw. elektrisch verbunden. Zum Schutz vor Störpulsen ist an den Kontaktelementen ein Schutzkondensator 18 angeordnet.

Die Aufnahmeöffnung 11 über dem Chip 5 ist mit einem Schutzgel 19 gefüllt, das zum einen den Chip 5 und die Bonddrähte 17 abdeckt und gegen Feuchtigkeit schützt und zum anderen eine Übertragung von Druck aus dem Bereich der Aufnahmeöffnung 11 auf den Chip 5 bzw. das Drucksensorelement 6 zulässt.

Die Aufnahmeöffnung 11 ist durch einen Deckel 20 abgedeckt.

Der Trägerkörper 2 sitzt auf dem Sockelelement 1 und ist durch eine Bördelverbindung an dem Außensechskant 21 mit dem Sockelelement 1 verbunden. Der Spalt zwischen dem Trägerkörper 2 und dem Sockelelement ist durch ein Dichtelement, beispielsweise einen O-Ring 22, für die Abdichtung zwischen Metall und Kunststoff, druckdicht abgedichtet, so dass kein verglichen mit der Erfassungsgenauigkeit des Drucksensorelements 6 signifikanter Druckverlust auftreten kann.

Dadurch, dass der Durchmesser des Trägerköpers 2 kleiner als der größte Außendurchmesser des Außensechskants 21 ist, kann die Druckerfassungsvorrichtung einfach mittels eines entsprechenden Steckschlüssels mit Innensechskant aus der Steckrichtung S befestigt werden. Aus der gleichen Richtung braucht dann zur kompletten Montage nur noch der komplementäre Steckverbinder in die Aufnahme 12 gesteckt zu werden.

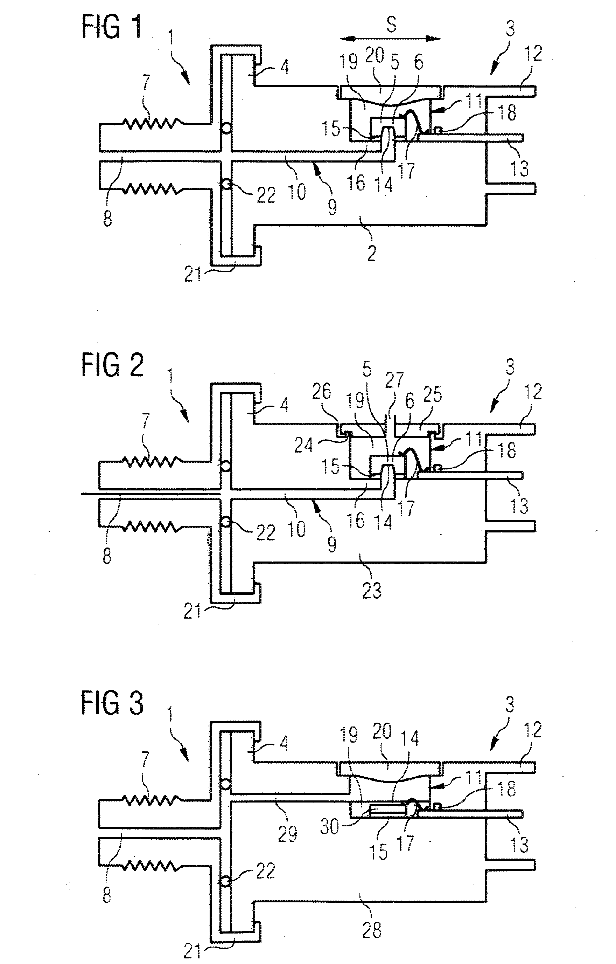

Eine Druckerfassungsvorrichtung nach einer zweiten bevorzugten Ausführungsform in Fig. 2 unterscheidet sich von dem ersten Ausführungsbeispiel durch die Ausbildung und Befestigung des Deckels 20 sowie die Ausbildung des Trägerkörpers. Alle anderen Teile der Vorrichtung sind unverändert, so dass die Erläuterungen für das erste Ausführungsbeispiel auch hier gelten und die gleichen Bezugszeichen verwendet werden.

Der Trägerkörper 23 unterscheidet sich von dem Trägerkörper 2 nur darin, dass eine Nut 24 vorgesehen ist, die die Aufnahmeöffnung umläuft. Alle anderen Merkmale sind unverändert und es werden für die unveränderten Merkmale die gleichen Bezugszeichen verwendet wie im ersten Ausführungsbeispiel.

Der Deckel 25 unterscheidet sich von dem Deckel 20 zum einen durch eine umlaufende Kand 26, die in die Nut 24 greift, und zum anderen durch eine Anschlussöffnung bzw. Druckdurchführung 27, mittels derer der Bereich unter dem Deckel 25 mit einem weiteren Druckbehälter verbunden werden kann.

Zwischen dem Deckel 25 und dem Trägerkörper 23 befindet sich ein abdichtendes Material, um Druckverluste durch den Spalt zwischen diesen Elementen zu vermeiden.

Diese Druckerfassungsvorrichtung ist somit als Differenzdruckerfassungseinrichtung verwendbar, mittels derer die Differenz zwischen dem Druck in dem Anschlusskanal 8 und dem Druck in der Druckdurchführung 27, fortgeleitet durch das Schutzgel 19 erfassbar ist.

Eine Druckerfassungsvorrichtung nach einer dritten bevorzugten Ausführungsform in Fig. 3 unterscheidet sich von dem ersten Ausführungsbeispiel durch die Befestigung des Deckels 20, die Ausbildung des Trägerkörpers und die Art des Chips 5. Alle anderen Teile der Vorrichtung sind unverändert, so dass die Erläuterungen für das erste Ausführungsbeispiel auch hier gelten und die gleichen Fezugszeichen verwendet werden.

Der Trägerkörper 28 ist wie der Trägerkörper des zweiten Ausführungsbeispiels ausgebildet, wobei nun allerdings der Druckkanal 29 parallel zur Steckrichtung verlaufend ohne Knick in die Aufnahmeöffnung 11 mündet.

Statt des Chips 5 wird nun ein für Absolutdruckmessungen geeigneten Chip 30 verwendet, der auf den Boden der Aufnahmeöffnung 11 aufgeklebt ist. Ansonsten ist der Chip 30 wie der Chip 5 kontaktiert und mit dem Schutzgel 19 abgedeckt. Die Abdeckung erfolgt dabei so, dass der Druckkanal 29 zwischen dem Deckel 20 und der Oberfläche des Schutzgels in die Aufnahmeöffnung mündet.

Der Deckel 20 ist nun druckdicht mit dem Trägerkörper 28 verbunden, um Druckverluste durch den Spalt zwischen dem Deckel 20 und dem Trägerkörper 28 zu vermeiden.

Diese Druckerfassungsvorrichtung ist als Absolutdruckerfassungsvorrichtung geeignet.

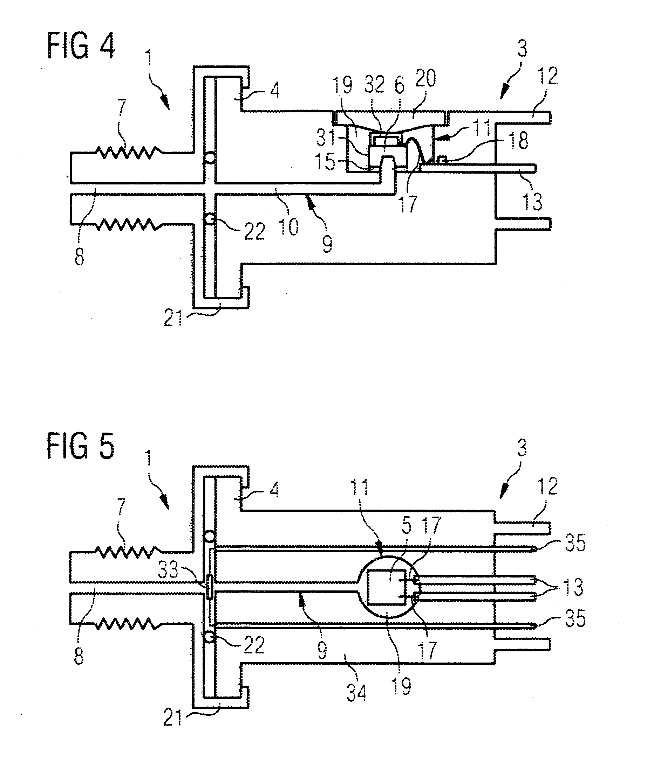

Eine Druckerfassungsvorrichtung nach einer vierten bevorzugten Ausführungsform in Fig 4 unterscheidet sich von dem ersten Ausführungsbeispiel durch die Art des Chips. Alle anderen Teile der Vorrichtung sind unverändert, so dass die Erläuterungen für das erste Ausführungsbeispiel auch hier gelten und die gleichen Bezugszeichen verwendet werden.

Der Chip 31 verfügt nun über eine vakuumdichten und vakuumdicht befestigten Chipdeckel 32 über dem Drucksensorelement 6, so dass eine Referenzvakuumzelle gebildet wird, in der ein Referenzvakuum besteht.

Dadurch ist eine Absolutdruckerfassung möglich.

Eine Druckerfassungsvorrichtung nach einer fünften bevorzugten Ausführungsform in Fig. 5, in der eine gegenüber der Fig. 1 um 90° gedrehte Schnittebene gezeigt ist, unterscheidet sich von dem ersten Ausführungsbeispiel durch die Verwendung eines Temperatursensors 33 und die Ausbildung des Trägerkörpers. Alle anderen Teile der Vorrichtung sind unverändert, so daß die Erläuterungen für das erste Ausführungsbeispiel auch hier gelten und die gleichen Bezugszeichen verwendet werden.

Der Trägerkörper 34 unterscheidet sich von dem Trägerkörper 2 nur darin, dass zwei weitere Kanäle für Kontaktelemente 35 vorgesehen sind, in denen die Kontaktelemente 35 angeordnet sind, die von dem Steckverbinderbereich bis an das andere Ende des Trägerkörpers 34 reichen. Alle anderen Merkmale sind unverändert und es werden für die unveränderten Merkmale die gleichen Bezugszeichen verwendet wie im ersten Ausführungsbeispiel.

Im Bereich des Eingangs des Druckkanals 9 ist der Temperatursensor 33 angeordnet, der direkt mit den Kontaktelementen 35 verbunden ist. Der Temperatursensor kann natürlich auch im Anschlusskanal 8 liegen bzw. hineinragen. Dies kann man auch schweiterbilden, dass der Temperatursensor aus dem Anschlusskanal 8 zumindest teilweise aus dem Sockelelement 1 ragt. Diese Varianten verkürzen die Ansprechzeiten für die Temperaturmessung.

Auf diese Weise wird parallel zur Druckerfassung eine Erfassung der Temperatur des Fluids, dessen Druck erfasst wird, ermöglicht.

Diese Aufnahme eines Temperatursensors ist in entsprechender Weise auch für andere Ausführungsbeispiele möglich.

Bei weiteren Ausführungsbeispielen ist statt des Chips bzw. der Chips eine Leiterplatte mit der Auswerteelektronik und eine Drucksensorelement vorgesehen, die wie der Chip in den geschilderten Ausführungsbeispielen gehalten und kontaktiert ist.

## Patentansprüche

1. Druckerfassungsvorrichtung mit
- einem Sockelelement (4) zur Halterung der Druckerfassungsvorrichtung, das einen Anschlusskanal (8) zur Zuführung eines unter Druck stehenden Fluids aufweist,
- einem gestreckten, sich entlang einer Steckrichtung erstreckenden Trägerkörper (2, 23, 28, 34), der an einem Ende einen Steckverbinderabschnitt (3) zum Zusammenstecken mit einem komplementären Steckverbinder in der Steckrichtung aufweist und der an dem anderen Ende mit dem Sockelelement (4) verbunden ist
- einem Drucksensorelement (6), das druckdicht in eine Aufnahmeöffnung (11) eingesetzt ist und mit Kontaktelementen (13) in dem Steckverbinderabschnitt (3) zur Übertragung von Signalen verbunden ist,
**dadurch gekennzeichnet, dass**
der Trägerkörper (2) einen mit dem Anschlusskanal (8) verbundenen Druckkanal (9) aufweist, und die Aufnahmeöffnung quer zur Steckrichtung verläuft und mit dem Druckkanal (9) kommuniziert, wobei das Drucksensorelement (6) derart in die Aufnahmeöffnung (11) eingesetzt ist, dass eine der druckempfindlichen Sensorflächen (14) des Drucksensorelements (6) Druck aus dem Druckkanal (9) ausgesetzt ist.

2. Druckerfassungsvorrichtung nach Anspruch 1, bei der der Anschlusskanal (8) und ein mit diesem verbundener Abschnitt des Druckkanals (9) geradlinig verlaufen.

3. Druckerfassungsvorrichtung nach Anspruch 1 oder 2, bei der der Trägerkörper (2, 23, 28, 34) so ausgebildet ist, dass der Druckkanal (9) mit einem zu der Steckrichtung (S) quer oder geneigt verlaufenden Endabschnitt in die Aufnahmeöffnung (11) führt.

4. Druckerfassungsvorrichtung nach einem der vorhergehenden Ansprüche, bei dem zwischen dem Druckkanal (9) und der Aufnahmeöffnung (11) ein Steg (16) liegt, auf dem das Drucksensorelement (6) oder ein Trägerelement für das Drucksensorelement (6) gehalten ist und/oder aufliegt.

5. Druckerfassungsvorrichtung nach einem der vorhergehenden Ansprüche, bei der der Trägerkörper (2, 23, 28, 34) einstückig ausgebildet ist.

6. Druckerfassungsvorrichtung nach einem der vorhergehenden Ansprüche, bei der der Trägerkörper (2, 23, 28, 34) wenigstens bis auf den Steckverbinderabschnitt (3) zylindrisch ist.

7. Druckerfassungsvorrichtung nach einem der vorhergehenden Ansprüche, bei dem das Drucksensorelement (6) so angeordnet ist, dass eine Normale auf eine druckempfindliche Fläche des Drucksensorelements (6) orthogonal oder schräg zu der Steckrichtung verläuft.

8. Druckerfassungsvorrichtung nach einem der vorhergehenden Ansprüche, bei der das Drucksensorelement (6) und eine Auswerteelektronik zur Ansteuerung und/oder Auswertung von Signalen des Drucksensorelements (6) auf einem Chip (5, 30, 31) integriert sind, der mit den Kontaktelementen zur Signalübertragung verbunden, insbesondere kontaktiert, ist.

9. Druckerfassungsvorrichtung nach einem der vorhergehenden Ansprüche, bei der das Drucksensorelement und eine Auswerteelektronik zur Ansteuerung und/oder Auswertung von Signalen des Drucksensorelements (6) auf einem Trägerelement gehalten sind, wobei die Auswerteelektronik mit den Kontaktelementen zur Signalübertragung kontaktiert ist.

10. Druckerfassungsvorrichtung nach einem der vorhergehenden Ansprüche, bei der der Chip (5, 30, 31) oder das Trägerelement mit dem Trägerkörper (2, 23, 28, 34) verklebt ist.

11. Druckerfassungsvorrichtung nach einem der vorhergehenden Ansprüche, bei dem der Chip (5, 30, 31) oder das Trägerelement mit Schutzmaterial abgedeckt sind.

12. Druckerfassungsvorrichtung nach einem der vorhergehenden Ansprüche, die weiter einen Deckel (20) umfasst, der die Aufnahmeöffnung (11) verschließt.

13. Druckerfassungsvorrichtung nach einem der vorhergehenden Ansprüche, bei der der Deckel (20) die Aufnahmeöffnung (11) bis auf eine Anschlussöffnung gasdicht verschließt.

14. Druckerfassungsvorrichtung nach einem der vorhergehenden Ansprüche, bei der das Drucksensorelement (6) zur Messung eines Absolutdrucks ausgebildet ist.

15. Druckerfassungsvorrichtung nach dem vorhergehenden Anspruch, bei der das Drucksensorelement (6) auf einer Bodenfläche der Aufnahmeöffnung (11) befestigt ist, und der Druckkanal (9, 29) zwischen der Bodenfläche und der quer zur Steckrichtung liegenden Oberfläche des Trägerkörpers (2, 23, 28, 34) in die Aufnahmeöffnung (11) mündet.

16. Druckerfassungsvorrichtung nach einem der vorhergehenden Ansprüche, die weiter einen an dem Druckkanal (9, 29) angeordneten Temperatursensor (33) aufweist.

## Claims

1. Pressure detection device, with
- a base element (4) for holding the pressure detection device, which base element has a connecting duct (8) for the supply of a pressurized fluid,
- an extended carrier body (2, 23, 28, 34), which extends along a plugging direction, at one end has a plug connector portion (3) for plugging together with a complementary plug connector in the plugging direction and at the other end is connected to the base element (4),
- a pressure sensor element (6) which is inserted, pressure-tight, into a reception orifice (11), and which is connected to contact elements (13) in the plug connector portion (3) for the transmission of signals, **characterized in that** the carrier body (2) has a pressure duct (9) connected to the connecting duct (8), and the reception orifice runs transversely to the plugging direction and communicates with the pressure duct (9), the pressure sensor element (6) being inserted into the reception orifice (11) in such a way that one of the pressure-sensitive sensor surfaces (14) of the pressure sensor element (6) is exposed to pressure from the pressure duct (9).

2. Pressure detection device according to Claim 1, in which the connecting duct (8) and a portion of the pressure duct (9) which is connected to said connecting duct run rectilinearly.

3. Pressure detection device according to Claim 1 or 2, in which the carrier body (2, 23, 28, 34) is designed such that the pressure duct (9) leads, with an end portion running transversely or at an inclination with respect to the plugging direction (S), into the reception orifice (11).

4. Pressure detection device according to one of the preceding claims, in which there lies between the pressure duct (9) and the reception orifice (11) a web (16) on which the pressure sensor element (6) or a carrier element for the pressure sensor element (6) is held and/or lies.

5. Pressure detection device according to one of the preceding claims, in which the carrier body (2, 23, 28, 34) is designed in one piece.

6. Pressure detection device according to one of the preceding claims, in which the carrier body (2, 23, 28, 34) is cylindrical at least with the exception of the plug connector portion (3).

7. Pressure detection device according to one of the preceding claims, in which the pressure sensor element (6) is arranged such that a perpendicular to a pressure-sensitive surface of the pressure sensor element (6) runs orthogonally or obliquely with respect to the plugging direction.

8. Pressure detection device according to one of the preceding claims, in which the pressure sensor element (6) and evaluation electronics for the activation and/or evaluation of signals from the pressure sensor element (6) are integrated on a chip (5, 30, 31) which is connected, in particular contacted, with the contact elements for signal transmission.

9. Pressure detection device according to one of the preceding claims, in which the pressure sensor element and evaluation electronics for the activation and/or evaluation of signals from the pressure sensor element (6) are held on a carrier element, the evaluation electronics being contacted with the contact elements for signal transmission.

10. Pressure detection device according to one of the preceding claims, in which the chip (5, 30, 31) or the carrier element is adhesively bonded to the carrier body (2, 23, 28, 34).

11. Pressure detection device according to one of the preceding claims, in which the chip (5, 30, 31) or the carrier element is covered with protective material.

12. Pressure detection device according to one of the preceding claims, which further comprises a cover (20) which closes the reception orifice (11).

13. Pressure detection device according to one of the preceding claims, in which the cover (20) closes the reception orifice (11), gas-tight, with the exception of a connecting orifice.

14. Pressure detection device according to one of the preceding claims, in which the pressure sensor element (6) is designed for measuring an absolute pressure.

15. Pressure detection device according to the preceding claim, in which the pressure sensor element (6) is fastened to a bottom surface of the reception orifice (11), and the pressure duct (9, 29) issues into the reception orifice (11) between the bottom surface and that surface of the carrier body (2, 23, 28, 34) which lies transversely with respect to the plugging direction.

16. Pressure detection device according to one of the preceding claims, which further has a temperature sensor (33) arranged on the pressure duct (9, 29).

## Revendications

1. Dispositif de détection de la pression comprenant:
- un élément (4) formant socle pour la fixation du dispositif de détection de la pression, qui comporte un canal ( 8 ) de raccordement pour l'alimentation (8) en un fluide sous pression,
- une pièce (2, 23, 28, 34) de support, qui est oblongue, qui s'étend d'une manière oblongue le long d'une direction, qui comporte, à une extrémité, un segment (3) de connecteur à enficher pour la connexion à un connecteur complémentaire de la technique d'enfichage et qui est reliée, à l'autre extrémité, à l'élément (4) formant socle
- un élément (6) formant capteur de pression, qui est inséré d'une manière étanche à la pression dans une ouverture (11) de réception et qui est relié à des éléments (13) de contact dans le segment (13) de connecteur à enficher pour la transmission de signaux, **caractérisé en ce que**
la pièce (2) de support comporte un canal (9) sous pression communiquant avec le canal (8) de raccordement et l'ouverture de réception s'étend transversalement à la direction d'enfichage et communique avant le canal (9) sous pression, l'élément (6) formant capteur de pression étant inséré dans l'ouverture (11) de réception, de manière à ce que l'une des surfaces (14), sensible à la pression de l'élément (6) formant capteur de pression, soit soumise à la pression du canal (9) sous pression.

2. Dispositif de détection de la pression suivant la revendication 1, dans lequel le canal (8) de raccordement et un segment qui y est relié du canal (9) sous pression s'étendent en ligne droite.

3. Dispositif de détection de la pression suivant la revendication 1 ou 2, dans lequel la pièce (2, 23, 28, 34) de support est telle que le canal (9) sous pression mène à l'ouverture (11) de réception par un segment d'extrémité transversal ou incliné par rapport à la direction (S) d'enfichage.

4. Dispositif de détection de la pression suivant l'une des revendications précédentes, dans lequel entre le canal (9) sous pression et l'ouverture (11) de réception, il y a un tenon (16), sur lequel l'élément (6) formant capteur de la pression ou un élément de support de l'élément (6) formant capteur de la pression est maintenu et/ou s'applique.

5. Dispositif de détection de la pression suivant l'une des revendications précédentes, dans lequel la pièce (2, 23, 28, 34) de support est constituée d'un seul tenant.

6. Dispositif de détection de la pression suivant l'une des revendications précédentes, dans lequel la pièce (2, 23, 28, 34) de support est cylindrique au moins jusqu'au segment (3) de connecteurs à enficher.

7. Dispositif de détection de la pression suivant l'une quelconque des revendications précédentes, dans lequel l'élément (6) formant capteur de pression est disposé de manière à ce qu'une normale a une surface sensible à la pression de l'élément (6) formant capteur de pression soit orthogonale ou inclinée par rapport à la direction de l'enfichage.

8. Dispositif de détection de la pression suivant l'une quelconque des revendications précédentes, dans lequel l'élément (6) formant capteur de pression et une électronique d'exploitation pour la commande et/ou l'exploitation de signaux de l'élément (6) formant capteur sous pression sont intégrés sur une puce (5, 30, 31), qui est reliée aux éléments de contact pour la transmission du signal en étant notamment en contact avec eux.

9. Dispositif de détection de la pression suivant l'une quelconque des revendications précédentes, dans lequel l'élément formant capteur de pression et une électronique d'exploitation pour la commande et/ou l'exploitation de signaux de l'élément (6) formant capteur de pression sont maintenus sur un élément de support, l'électronique d'exploitation étant mise en contact avec les éléments de contact pour la transmission du signal.

10. Dispositif de détection de la pression suivant l'une quelconque des revendications précédentes, dans lequel la puce (5, 30, 31) ou l'élément de support est collé à la pièce (2, 23, 28, 34) de support.

11. Dispositif de détection de la pression suivant l'une des revendications précédentes dans lequel la puce (5, 30, 31) ou l'élément de support sont recouverts de matériau de protection.

12. Dispositif de détection de la pression suivant l'une des revendications précédentes, qui comprend, en outre, un couvercle (20) qui ferme l'ouverture (11) de réception.

13. Dispositif de détection de la pression suivant l'une des revendications précédentes, dans lequel le couvercle (20) ferme l'ouverture (11) de réception d'une manière étanche au gaz, à l'exception de l'ouverture de raccordement.

14. Dispositif de détection de la pression suivant l'une des revendications précédentes, dans lequel l'élément (6) formant capteur de pression est constitué pour la mesure d'une pression absolue.

15. Dispositif de détection de la pression suivant l'une des revendications précédentes, dans lequel l'élément (6) formant capteur de pression est fixé sur une surface de fond de l'ouverture (11) de réception et le canal (9, 29) sous pression débouche dans l'ouverture (11) de réception entre la surface de fond et la surface de la pièce (2, 23, 28, 34) de support, qui est transversale à la direction d'enfichage.

16. Dispositif de détection de la pression suivant l'une des revendications précédentes, qui comprend, en outre, un capteur (33) de température monté sur le canal (9, 29) sous pression.
